## Europäisches Patentamt
## European Patent Office
## Office européen des brevets

(11) Veröffentlichungsnummer: **0 165 557**
**B1**

(12) **EUROPÄISCHE PATENTSCHRIFT**

(45) Veröffentlichungstag der Patentschrift: **31.10.90**

(51) Int. Cl.⁵: **C 08 G 8/10**

(21) Anmeldenummer: **85107307.2**

(22) Anmeldetag: **13.06.85**

(54) **Verfahren zur Herstellung von über o,o'-Methylenethergruppen verknüpften Phenolresolethern und deren Verwendung.**

(30) Priorität: **16.06.84 DE 3422510**

(43) Veröffentlichungstag der Anmeldung:
**27.12.85 Patentblatt 85/52**

(45) Bekanntmachung des Hinweises auf die
Patenterteilung:
**31.10.90 Patentblatt 90/44**

(84) Benannte Vertragsstaaten:
**AT BE CH DE FR GB IT LI NL SE**

(56) Entgegenhaltungen:
**EP-A-0 116 308**
**CA-A- 902 292**
**US-A-4 120 847**
**US-A-4 157 324**

(73) Patentinhaber: **BASF Aktiengesellschaft
Carl-Bosch-Strasse 38
D-6700 Ludwigshafen (DE)**

(72) Erfinder: **Kempter, Fritz Erdmann, Dr.
L 2, 14
D-6800 Mannheim 1 (DE)**
Erfinder: **Nieberle, Juergen, Dr.
Am Huettenwingert
D-6706 Wachenheim (DE)**

Courier Press, Leamington Spa, England.

**Beschreibung**

Die Erfindung betrifft ein Verfahren zur Herstellung von über o,o'-Methylenethergruppen verknüpften Phenolresolethern und deren Verwendung.

Orthoreiche Resole sind z.B. in der US-PS-3,485,797 beschrieben. Dabei handelt es sich um ein Verfahren, welches in nicht-wäßrigen Lösungsmitteln wie z.B. Benzol usw. durchgeführt wird.

Orthoreiche Resole, deren Methylolgruppen mit einwertigen Alkoholen partiell verethert worden sind, werden in der US-PS-4,120,847 und 4,157,324 sowie 4,122,054 beschrieben.

Die Methylolierung von Phenol zur Herstellung orthoreicher, d.h. über o,o'-Methylenethergruppen verknüpfter Phenolresole wird vorteilhaft in wäßrigem Medium durchgeführt. Die Orientierung der Methylolgruppen in die o-Position erfolgt durch die Verwendung vorzugsweise zweiwertiger Metallionen als Katalysatoren. Der günstigste pH-Bereich für diese Reaktion liegt bei 4,5-5,5. In leicht alkalischer Lösung können Ca$^{++}$- und Mg$^{++}$-Ionen als Katalysatoren eingesetzt werden. Für den Grad der Methylolierung in o-Position ist dieser pH-Bereich aber ungünstig.

Außerdem ist für den Grad der Methylolierung in o-Position — und die mengenmäßige Ausbeute — die Katalysatormenge mitbestimmend, so daß höhere Metallsalzmengen eingesetzt werden müssen. Diese höheren Mengen an Metallsalzen führen bei der Verfahrensdurchführung zu Schwierigkeiten und behindern den Einsatz der Verfahrensprodukte.

Ein Nachteil der bisher bekannten orthoreichen Resolether ist ihr Gehalt an nicht umgesetztem freien Phenol, der im allgemeinen bei 5-12%, bezogen auf den Festharzanteil, liegt.

Aufgabe der vorliegenden Erfindung ist es, ein Verfahren zur Herstellung orthoreicher Phenolresolether bereitzustellen, welches gewährleistet, daß für den Fall der Verfahrensdurchführung, beginnend mit der Methylolierung in wäßrigem Medium, die als Katalysator notwendigen relativ hohen Konzentrationen an Me$^{++}$-Ionen in im wesentlichen unlösliche Produkte überführt werden können, so daß die Entfernung dieser Produkte aus dem Reaktionsgemisch ohne z.B. Filtrationsprobleme möglich ist und in der weiteren Durchführung des Verfahrens Vernetzungsreaktionen vermieden werden.

Eine weitere Aufgabe ist es, sicherzustellen, daß die Verfahrensprodukte von Restphenolmengen im wesentlichen frei sind, d.h. daß ihr Gehalt an Phenol <1% ist.

Außerdem sollen die Verfahrensprodukte für die vorgesehenen Verwendungsmöglichkeiten, wie z.B. zur Herstellung von Preßmassen für Elektroisolierungen, zur Herstellung von Laminaten, speziell solchen für Elektroisolierungen, zur Herstellung von Fasermatten und zur Herstellung von bevorzugt Emissions- und gegebenenfalls auch Methylolgruppen-armer Vernetzungsmittel für Lacksysteme bzw. zur Herstellung von Beschichtungsmitteln vorteilhaft verwendbar sein.

Diese Aufgabe läßt sich überraschenderweise durch das erfindungsgemäße Verfahren lösen.

Gegenstand der vorliegenden Erfindung ist ein Verfahren zur Herstellung von im wesentlichen Phenol-freien, über o,o'-Methylenethergruppen verknüpften Phenolresolethern aus Phenol und/oder m-alkylsubstituierten Phenolen, gegebenenfalls im Gemisch mit anderen Alkylphenolen, und Formaldehyd oder Formaldehyd-liefernden Verbindungen in Gegenwart von Me$^{++}$-Ionen und anschließende Veretherung mit 1- bis 3-wertigen Alkoholen, das dadurch gekennzeichnet ist, daß,

$a_1$ die Methylolierung in wassrigem Medium in Anwesenheit von 0,5-10 Gew-% Me$^{++}$-Ionen, bezogen auf das eingesetzte Phenol, durchgeführt wird,

$a_2$ die Me$^{++}$-Ionen anschließend als schwerlösliches Salz entfernt werden,

$a_3$ die Abtrennung des als Lösungsmittel im Reaktionsgemisch vorliegenden Wassers, gegebenenfalls in Anwesenheit eines oder mehrerer 1- bis 3-wertiger Alkohole und eines Schleppmittels, bei 30-80°C, die Abtrennung des bei der Veretherung entstehenden Reaktionswassers bei 45-120°C, durchgeführt wird; und schließlich die Restphenolmengen der Verfahrensprodukte bis auf einen Phenolgehalt von unter 1 Gew.% durch Dünnschichtverdampfung entfernt.

Zur Veretherung werden vorzugsweise ein oder zweiwertige Alkohole, insbesondere Hexandiol eingesetzt.

Die Me$^{++}$-Ionen werden vorzugsweise in Form carbonsaurer Salze eingesetzt, wobei als Carbonsäuresalze die Formiate, Acetate oder Propionate bevorzugt sind.

Gegenstand der vorliegenden Erfindung ist außerdem die Verwendung der erfindungsgemäß erhaltenen Phenolresolether zur Herstellung von Beschichtungssystemen und in Klebstoffen.

Im Falle der Verfahrensdurchführung in wäßrigem Medium entspricht die Reihenfolge der durchzuführenden Verfahrensschritte der oben angegebenen Folge von $a_1$ bis $a_3$. Eine etwaige Änderung dieser Reihenfolge, beispielsweise die Abtrennung des Wassers vor der Entfernung der Salze, würde die Filtrierbarkeit beeinflussen und damit die technische Durchführbarkeit des Verfahrens deutlich erschweren.

Bezüglich der Aufbaukomponenten und einzelnen Verfahrensschritte sowie zur Verwendung der Verfahrensprodukte ist im einzelnen folgendes auszuführen:

$a_1$ Zur Herstellung der orthoreichen Resolether nach dem erfindungsgemäßen Verfahren werden Phenol, gegebenenfalls im Gemisch mit Alkylphenolen (o- oder p-substituiert) oder Kohlenwasserstoffharze, die Phenolgruppierungen enthalten, oder Polybutadienoel-modifizierte Phenolkörper, z.B. nach der EP 2 517, sowie m-substituierte Alkylphenole zusammen mit Formaldehyd im wäßrigen System in Anwesenheit von die Reaktion in die o-Position dirigierenden Katalysatoren, z.B. zweiwertigen Metallionen bei pH 4-7, bevorzugt pH 4,5-6,0 bei 80- 100°C zur Reaktion gebracht, bis der

2

Formaldehyd überwiegend abreagiert hat. Als Katalysatoren kommen die Salze flüchtiger organischer Carbonsäuren 2-wertiger elektropositiver Metalle in Frage, wie z.B. $Zn^{++}$, $Sn^{++}$, $Mg^{++}$, $Ca^{++}$, $Pb^{++}$, $Ba^{++}$, $Co^{++}$, gegebenenfalls auch deren Gemische, in einer Menge von 0,5-10, bevorzugt 1,3-5 Gew.%, bezogen auf eingesetztes Phenol, bevorzugt in Form ihrer carbonsauren Salze, wie ihrer Formiate, Acetate und Propionate. Besonders bevorzugt sind Formiate und Acetate.

Die einzusetzenden Mengenverhältnisse Phenol/Formaldehyd liegen im allgemeinen bei 1:1,0 bis 1:2,5 Mol, bevorzugt 1:1,5 bis 1:2,2 Mol.

Der Kondensationsgrad der Produkte gegen Ende dieser Verfahrensstufe beträgt im Mittelwert 1-4 Phenoleinheiten. Bei höheren Kondensationsgraden liegt meistens eine nicht homogene wäßrige Einstellung vor.

$a_2$ Die Verfahrensstufe $a_2$ betrifft die Entfernung der gelöst vorliegenden Katalysatormengen, also der $Me^{++}$-Ionen.

$a_{2.1}$ Zu diesem Zweck können sie in wasserunlösliche Salze, z.B. Phosphate (Hydrogen- oder Ammonium-Phosphate) oder Sulfate oder Carbonate überführt werden. Als Auswahlkriterium gilt die problemlose Abtrennung der praktisch unlöslichen Salze, z.B. durch Filtration. Die Filtration begünstigend wirkt sich zu diesem Zeitpunkt bereits die Anwesenheit der später zur Veretherung einzusetzenden Alkohole aus oder anderer die Homogenisierung des Ansatzes herbeiführender Zusätze, die vor der Veretherung wieder entfernt werden, wie z.B. Methanol.

Bevorzugt werden die für die Durchführung des Verfahrens besonders geeigneten Zinksalze als Hydrogenphosphate entfernt.

Zur Herstellung der unlöslichen Phosphate wird zweckmäßigerweise wäßrige Phosphorsäure bei 20-70°C, bevorzugt 40-60°C, innerhalb etwa einer Stunde zudosiert. Überschüsse an nicht umgesetzter Phosphorsäure sind zu vermeiden, da diese zu übermäßigem Molekulargewichtsanstieg oder zur Vernetzung des Ansatzes führen können.

$a_{2.2}$ Eine andere, ebenfalls sehr wirkungsvolle Methode ist die Anwendung von $Me^{++}$-Formiaten, Acetaten oder anderen $Me^{++}$-Salzen, die unter den Bedingungen der Methylolierung bei 80-100°C gelöst vorliegen, nach dem Abkühlen aber kristallisieren und so leicht abzutrennen sind. Dazu geeignet sind z.B. Zinkformiat und Bariumacetat.

Besonders vorteilhaft ist die Verfahrensvariante $a_{2.2}$ zu verwenden, wenn die Verfahrensstufe $a_1$ so durchgeführt wird, daß nach diesem Schritt das Reaktionsprodukt ein mittleres Molekulargewicht von 150-250 aufweist.

$a_3$ Dieser Verfahrensschritt dient der Abtrennung des Wassers, und zwar des Lösungsmittelwassers und des Reaktionswassers. Unter Reaktionswasser ist abgespaltenes Wasser aus der Veretherung der Methylolgruppen mit den alkoholischen OH-Gruppen und Wasser aus der Bildung der Methylenetherbrücken zu verstehen. Der Veretherungsgrad der Methylolgruppen (mit den alkoholischen OH-Gruppen) kann stark schwanken, sollte jedoch so eingestellt sein, daß die Reaktivität der Produkte nicht zu hoch ist und eine problemlose Entfernung der Restphenolmengen im Dünnschichtverdampfer gewährleistet wird. Im übrigen richtet sich der Veretherungsgrad nach dem Verwendungszweck der Produkte. So sind z.B. für die Verwendung als Beschichtungsmittel auf dem Gebiet der kathodischen Elektrotauchlackierung in manchen Fällen methylolgruppenarme Produkte besonders vorteilhaft einzusetzen. Die Herstellung solcher Produkte wird durch das erfindungsgemäße Verfahren ermöglicht.

Die Abtrennung des Wassers erfolgt meistens in Anwesenheit eines Schleppmittels wie Toluol oder Cyclohexan unter vermindertem Druck, beginnend bei 30-50°C unter langsamem Anstieg der Temperatur auf 60-80°C und Abnahme des pH-Wertes des übergehenden Wassers. Der Übergang zur Abtrennung des bei der Veretherung entstehenden Reaktionswassers ist durch langsameres Abdestillieren des Wassers erkennbar; dies ist im Temperaturbereich von 45-120, vorzugsweise 50 bis 110°C, durchzuführen.

Nach der Beendigung der Veretherungsreaktionen weisen die Verfahrensprodukte im allgemeinen einen Kondensationsgrad von 2-6, vorzugsweise 3-5 auf. Der Restphenolgehalt liegt bei 4-12, meistens bei 5-7 Gew.% Phenol, bezogen auf das Festharz.

Die Temperaturen zur Entfernung des Wassers sind so zu wählen, daß bei einer Entfernung des Lösungsmittels Wasser im unteren Temperaturbereich von 30-40°C höhere Veretherungstemperaturen von z.B. 60-80°C folgen sollen; wird der erste Schritt der Wasserentfernung z.B. bei 45-50°C durchgeführt, sollten niedrigere Veretherungstemperaturen, z.B. 50-70°C zur Durchführung der Veretherung gewählt werden. Die Entfernung des als Lösungsmittel vorliegenden Wassers wird bevorzugt bei 35-80°C vorgenommen. Die Veretherungsreaktion wird bevorzugt in 2-3 Temperaturstufen bei 50-85°C ausgeführt.

Zur Veretherung kommen Mono-, Di- und Trialkohole in Betracht, bevorzugt solche, die unter den im Folgenden diskutierten Bedingungen nicht oder nur geringfügig aus dem Reaktor ausgeschleppt werden, wie z.B. Ethylenglykolmonobutylether, Ethylenglykolmonohexylether, Phenylglykol, Diethylenglykolmonobutylether, Benzylalkohol, Ethylenglykol, Hexandiol-1,6, Pentandiol-1,5, Butandiol-1,4, Mono-, Di-, Tri- und Tetraethylenglykol, Decandiol-1,10, Dipropylenglykol, Thiodiglykol oder Gemische dieser Alkohole. Besonders bevorzugt sind Dialkohole mit primären OH-Gruppen wie Hexandiol-1,6, Butandiol-1,4, Pentandiol-1,5, Mono-, Di- und Triethylenglykol.

Die Veretherung mit den schwerflüchtigen Dialkoholen wird so geführt, daß möglichst vollständiger Umsatz erreicht wird. Im Extremfall werden beide OH-Gruppen des Alkohols umgesetzt. Im allgemeinen liegen Produkte vor, deren Alkoholkomponente halbseitig bzw. beidseitig mit Methylolgruppen verethert ist.

3

Zur Reduzierung bzw. Entfernung der Restphenolmengen, anteilig auch von Monomethylolphenol und der Alkohole werden die nach der Veretherung (= Verfahrensstufe $a_3$) vorliegenden Produkte im Dünnschichtverdampfer bei 80-120°C und unter vermindertem Druck auf einen Phenolgehalt von <1 Gew.% Phenol gebracht.

Für einige Anwendungen, besonders auf dem Beschichtungssektor, ist es vorteilhaft, Produkte besonders niedriger Restphenolgehalte bereitzustellen; in diesen Fällen lassen sich Produkte mit Phenolgehalten von 0,05-0,5%, bezogen auf das Festharz, erfindungsgemäß ohne weiteres herstellen.

Der Kondensationsgrad steigt dabei im allgemeinen nochmals an. Die Entfernung der restlichen Phenole kann auch mehrstufig in hintereinander geschalteten Dünnschichtverdampfern durchgeführt werden. Temperatur und Verweilzeit können so gewählt werden, daß die Verfahrensprodukte das gewünschte mittlere Molekulargewicht aufweisen. Molekulargewichte von im Mittel 300-2000, bevorzugt 400-1000, ermöglichen im allgemeinen die Verwendung der Verfahrensprodukte für die vorgesehenen Verwendungen.

In Abhängigkeit von der eingesetzten Me$^{++}$-Verbindung werden, z.B. bei Verwendung von Zn$^{++}$, hellfarbige bzw. bei Verwendung von Pb$^{++}$, dunkle, viskose Massen mit Feststoffgehalten von 85-97,5% erhalten.

Verfahrensprodukte bei denen das Reaktionswasser bei niedrigen Temperaturen (45-80°C) entfernt wird, weisen im allgemeinen ein niedriges Veretherungsverhältnis von Benzylether-Gruppen zu Methylolalkylether-Gruppen sowie einen höheren Gehalt an nicht veretherten Methylolgruppen auf. Verfahrensprodukte, bei denen das Reaktionswasser bei höheren Temperaturen (80-110°C) entfernt wird, besitzen einen höheren Veretherungsgrad bei niedrigem Gehalt an Methylolgruppen und in einigen Fällen einen höheren Gehalt an Methylengruppen.

Die Verwendung der erfindungsgemäßen Verfahrensprodukte erfolgt entweder in der angegebenen hochkonzentrierten Form oder verdünnt mit irgend einem geeigneten Lösungsmittel wie z.B. Alkoholen oder Estern.

Der Einsatz der erfindungsgemäß hergestellten Phenolresolether kann als Alleinbindemittel erfolgen. Eine weitere Einsatzmöglichkeit besteht in der Kombination mit anderen, zur Co-Vernetzung geeigneten Stoffen. Von diesen seien besonders genannt: Bindemittel mit basischen N-Atomen im Molekül, besonders solche, die NH-Gruppen aufweisen. Insbesondere seien solche genannt, die sich zur Verwendung als kathodische Elektrotauchlackbindemittel eignen, wie sie z.B in der DE-Patentanmeldung P 34 22 474.2, beschrieben sind. Gegebenenfalls ist die Anwesenheit eines sauren Katalysators, wie sie für diesen Einsatzzweck genannt wird, für die Beschleunigung der Vernetzungsreaktion nützlich.

Außerdem eignen sich die nach dem erfindungsgemäßen Verfahren hergestellten orthoreichen Resolether zur Verwendung als Kautschukhilfsmittel.

Im übrigen eignen sich die orthoreichen Resolether zur Herstellung von Preßmassen, Laminaten und Klebstoffen sowie als Binde- bzw. Vernetzungsmittel zur Herstellung von Elektroisolationsmitteln. Desweiteren lassen sich aus den orthoreichen Resolethern wäßrige Sekundärdispersionen herstellen, die ebenfalls auf einigen der genannten Einsatzgebiete vorteilhaft verwendet werden können.

Die in den Beispielen genannten Teile und Prozente sind, soweit nicht anders angegeben, Gewichtsteile und Gewichtsprozente.

Beispiel 1

1075,0 Teile Phenol, 1886,0 Teile wäßrige Formalin-Lösung 40 %ig und 99,0 Teile Zinkacetat (Zn(CH$_3$C00)$_2$ x 2H$_2$0) werden langsam auf 90°C aufgeheizt und 3,5 Stunden bei dieser Temperatur gehalten. Anschließend werden 500,0 Teile Hexandiol-1,6 zugesetzt und auf 50°C abgekühlt. In einer Stunde werden 44,5 Teile H$_3$PO$_4$ in 60,0 Teilen Wasser dieser Temperatur zugetropft, durch ein Faltenfilter filtriert und mit etwas Methanol nachgewaschen.

Dann wird in einem mit einem wirksamen Rückflußkühler ausgestatteten Reaktor nach Entfernung des Methanols und nach Zugabe von 500,0 Teilen Toluol Wasser bei ca. 45°C und 100-110 mbar ausgekreist, bis die Abtrennung langsamer zu werden beginnt. Darauf wird die Temperatur des Ansatzes stufenweise auf 50°C, 60°C und 75°C angehoben, bis das mittlere Molekulargewicht auf ca. 300 angestiegen ist. Der Ansatz wird erneut filtriert und bei 115°C und 0,5 mbar in einem Dünnschichtverdampfer behandelt. Das hellgelb gefärbte Harz (1690,0 Teile) hat einen Festgehalt von 92%, eine Viskosität von 2400 mPas bei 75°C, gemessen mit einem ICI-Platte-Kegel-Viskosimeter, ein mittleres Molekulargewicht von 400, einen Phenolgehalt von 0,35% sowie einem Zink-Gehalt von 90 ppm.

Beispiel 2

Ansatz wie Beispiel 1. Nach der Entfernung des Zinkphosphates wird das Wasser im ersten Schritt bei 35°C ausgekreist. Die folgenden Temperaturstufen sind 60°C, 75°C und 80°C. Die Ausbeute und Eigenschaften des Harzes entsprechen im wesentlichen denen des Beispiels 1.

Beispiel 3

Ansatz wie Beispiel 1. Nach Entfernung des Zikphosphates wird das Wasser bei 50°C ausgekreist. Bei der Veretherung wird die Temperatur dieses Ansatzes von 65°C nicht überschritten. Ausbeute und Eigenschaften des Harzes entsprechen im wesentlichen denen des Beispiels 1.

## EP 0 165 557 B1

### Patentansprüche

1. Verfahren zur Herstellung von im wesentlichen Phenol-freien, über o,o'-Methylenethergruppen verknüpften Phenolresolethern aus Phenol und/oder m-alkylsubstituierten Phenolen, gegebenenfalls im Gemisch mit anderen Alkylphenolen, und Formaldehyd oder Formaldehyd-liefernden Verbindungen in Gegenwart von $Me^{++}$-lonen und anschließende Veretherung mit 1- bis 3-wertigen Alkoholen, dadurch gekennzeichnet, daß

$a_1$ die Methylolierung in wässrigem Medium in Anwesenheit von 0,5-10 Gew.% $Me^{++}$-lonen, bezogen auf das eingesetzte phenol, durchgeführt.

$a_2$ die $Me^{++}$-lonen anschließend als schwerlösliches Salz entfernt.

$a_3$ die Abtrennung des als Lösungsmittel im Reaktionsgemisch vorliegenden Wassers, gegebenenfalls in Anwesenheit eines oder mehrerer 1- bis 3-wertiger Alkohole und eines Schleppmittels, bei 30-80°C, die Abtrennung des bei der Veretherung entstehenden Reaktionswassers bei 45-120°C, durchführt,

und schließlich die Restphenolmengen der Verfahrensprodukte bis auf einen Phenolgehalt von unter 1 Gew.% durch Dünnschichtverdampfung entfernt.

2. Verfahren nach Anspruch 1, dadurch gekennzeichnet, daß zur Veretherung ein- oder zweiwertige Alkohole eingesetzt werden.

3. Verfahren nach Anspruch 1 oder 2, dadurch gekennzeichnet, daß als Alkohol ein Dialkohol eingesetzt wird.

4. Verfahren nach einem der Ansprüche 1 bis 3, dadurch gekennzeichnet, daß die $Me^{++}$-lonen in Form carbonsaurer Salze eingesetzt werden.

5. Verfahren nach einem der Ansprüche 1 bis 4, dadurch gekennzeichnet, daß -als Carbonsäuresalze die Formiate, Acetate oder Propionate zweiwertiger Metalle eingesetzt werden.

6. Verfahren nach einem der Ansprüche 1 bis 5, dadurch gekennzeichnet, daß die zweiwertigen Metallionen als Salze der Phosphorsäure abgetrennt werden.

7. Verwendung der nach einem der Ansprüche 1 bis 6 erhaltenen Phenolresolether in Beschichtungssystemen.

8. Verwendung der nach einem der Ansprüche 1 bis 6 erhaltenen Phenolresolether in Klebstoffen.

### Revendications

1. Procédé de préparation de phénolrésoléthers enchainés par des groupements o,o'-méthylène-éther essentiellement exempts de phénol, à partir de phénol et/ou de m-alkylphénols, et éventuellement en mélange avec d'autres alkylphénols, et de formaldéhyde ou de composés libérant du formaldéhyde, en présence d'ions $Me^{++}$, et éthérification ultérieure avec des mono à trialcools, caractérisé en ce que

$a_1$ la méthylolation est menée en milieu aqueux en présence de 0,5 à 10% en poids d'ions $Me^{++}$, par rapport au phénol en réaction,

$a_2$ les ions $Me^{++}$ sont éliminés ensuite sous forme de sels difficilement solubles,

$a_3$ la séparation de l'eau introduite dans le mélange réactionnel comme solvant est effectuée à 30-80°C, éventuellement en présence d'un ou plusieurs mono- à tri-alcools et d'un produit d'entraînement, la séparation de l'eau de réaction se formant lors de l'étherification est effectuée à 45-120°C, et enfin on chasse par évaporation en couche mince les quantités résiduelles de phénol des produits de la réaction jusqu'à une teneur en phénol inférieure à 1% en poids.

2. Procédé selon la revendication 1 caractérisé en ce que, pour l'éthérification, on utilise des monoalcools ou des diols.

3. Procédé selon la revendication 1 ou 2, caractérisé en ce qu'on utilise comme alcool un diol.

4. Procédé selon l'une quelconque des revendications 1 à 3, caractérisé en ce qu'on utilise les ions $Me^{++}$ sous forme de sels d'acides carboxyliques.

5. Procédé selon l'une quelconque des revendications 1 à 4, caractérisé en ce qu'on utilise comme sels d'acides carboxyliques les formiates, acétates ou propionates de métaux divalents.

6. Procédé selon l'une quelconque des revendications 1 à 5, caractérisé en ce que les ions de métaux divalents sont éliminés sous forme de sels de l'acide phosphorique.

7. Utilisation des phénolrésoléthers obtenus par le procédé selon l'une quelconque des revendications 1 à 6, dans des systèmes d'enduction.

8. Utilisation des phénolrésoléthers obtenus par le procédé selon l'une quelconque des revendications 1 à 6, dans des adhésifs.

### Claims

1. A process for the preparation of an essentially phenol-free phenol resol ether which is linked via an o,o'-methylene ether group from phenol or an m-alkyl-substituted phenol, alone or mixed with other alkylphenols, and formaldehyde or a formaldehyde donor in the presence of $Me^{++}$ ions, and subsequent etherification with a monohydric, dihydric or trihydric alcohol, wherein

$a_1$ the methylolation is carried out in an aqueous medium in the presence of 0.5-10% by weight, based on the phenol used, of $Me^{++}$ ions,

$a_2$ the $Me^{++}$ ions are then removed as a sparingly soluble salt, and

$a_3$ the water present as a solvent in the reaction mixture is removed at 30-80°C in the presence or absence of one or more monohydric, dihydric or trihydric alcohols and an entraining agent, and the water of reaction formed during the etherification is separated off at 45-120°C, and, finally, the residual amounts of phenol in the products are removed by evaporation in a thin film evaporator until the phenol content is less than 1% by weight.

2. A process as claimed in claim 1, wherein a monohydric or dihydric alcohol is used for the etherification.

3. A process as claimed in claim 1 or 2, wherein the alcohol used is a dialcohol.

4. A process as claimed in any of claims 1 to 3, wherein the $Me^{++}$ ions are used in the form of a carboxylate.

5. A process as claimed in any of claims 1 to 4, wherein the carboxylate used is a formate, acetate or propionate of a divalent metal.

6. A process as claimed in any of claims 1 to 5, wherein the divalent metal ions are separated off as salts of phosphoric acid.

7. The use of a phenol resol ether obtained as claimed in any of claims 1 to 6 in coating systems.

8. The use of a phenol resol ether obtained as claimed in any of claims 1 to 6 in adhesives.